# EUROPÄISCHE PATENTSCHRIFT

(11) **EP 1 134 119 B1**
(45) Veröffentlichungstag und Bekanntmachung des Hinweises auf die Patenterteilung: **11.05.2005**
(21) Anmeldenummer: 01103819.7
(22) Anmeldetag: 16.02.2001
(51) Int. Cl.: B60Q 1/14

(54) **Einrichtung zur Überprüfung der Auswerteschaltung einer automatischen Schaltung für Beleuchtungseinrichtungen bei Fahrzeugen**
Checking device for the circuit of an automatic lighting device of a vehicle
Dispositif de contrôle d'un circuit de commande automatique de l'éclairage d'un véhicule

(30) Priorität: 15.03.2000 DE 10012542
(43) Veröffentlichungstag der Anmeldung: 19.09.2001
(73) Patentinhaber: ROBERT BOSCH GMBH, 70442 Stuttgart (DE)
(72) Erfinder: Schmitt, Patrick, 77839 Lichtenau (DE); Hog, Norbert, 77815 Buehl (DE); Hodapp, Bruno, 77855 Achern-Oensbach (DE); Pientka, Rainer, 77871 Renchen (DE); Meier, Hans, 77833 Ottersweier (DE); Blitzke, Henry, 77815 Buehl (DE); Burkart, Manfred, 76473 Iffezheim (DE)

(56) Entgegenhaltungen:
- EP-A- 0 445 958
- WO-A-00/55008
- DE-A- 19 523 262
- GB-A- 2 291 288
- US-A- 4 376 909
- US-A- 5 182 755
- PATENT ABSTRACTS OF JAPAN vol. 008, no. 073 (M-287), 5. April 1984 (1984-04-05) & JP 58 218439 A (NISSAN JIDOSHA KK), 19. Dezember 1983 (1983-12-19)

## Beschreibung

### Stand der Technik

Die Erfindung geht aus von einer Einrichtung zur Überprüfung der Auswerteschaltung einer automatischen Schaltung für Beleuchtungseinrichtungen bei Fahrzeugen, der im Oberbegriff des Anspruchs 1 definierten Gattung.

Aus der DE 195 23 262 A1 ist eine gattungsmäßige Einrichtung zur automatischen Schaltung von Beleuchtungseinrichtungen bei Fahrzeugen bekannt. Dabei ist eine Sensoreinrichtung vorgesehen, welche einen Globalsensor für die Erfassung der Lichtverhältnisse in der Umgebung des Fahrzeugs und einen Richtungssensor für die gerichtete Erfassung der Lichtverhältnisse in Fahrtrichtung vor dem Fahrzeug enthält. Die Signale der Sensoreinrichtung werden einer Auswerteschaltung zugeführt, um festzustellen, ob eine Änderung des Schaltzustandes der Beleuchungseinrichtungen erforderlich ist. Bei dieser bekannten, in Analogtechnik ausgeführten Auswerteschaltung ist keine Überwachung auf das richtige Funktionieren vorhanden.

Die Aufgabe vorliegender Erfindung ist das Überwachen der analogen Auswerteschaltung für die automatische Lichtschaltung.

### Vorteile der Erfindung

Die erfindungsgemäße Einrichtung zur Überprüfung der Auswerteschaltung einer automatischen Schaltung für Beleuchtungseinrichtungen bei Fahrzeugen mit den kennzeichnenden Merkmalen des Anspruchs 1 stellt in vorteilhafter Weise fest, ob die Auswerteschaltung richtig funktioniert. Dadurch wird folgender Mangel behoben: Falls die analoge Auswerteschaltung der automatischen Schaltung für die Beleuchtungseinrichtung eines Fahrzeugs ausfällt, d.h. dass die analoge Auswerteschaltung den sicherheitskritischen Zustand "Dämmerung" bzw. "Nacht" nicht erfasst, könnte das Abblendlicht beispielsweise von einem Steuergerät für das Abblendlicht her nicht eingeschaltet werden. Die Erfindung überwacht also diese sicherheitskritische Auswerteschaltung und leitet bei deren Nichtfunktion weitere Maßnahmen ein. So könnte das Steuergerät für das Abblendlicht darüber informiert werden, dass die Auswerteschaltung defekt ist. Um diesen Mangel dann zu beheben kann die Beleuchtungseinrichtung von diesem Steuergerät für das Abblendlicht her aktiviert werden und außerdem kann dem Fahrer des Fahrzeuges über das Problem eine Information zugeleitet werden.

Bei der Einrichtung nach der Erfindung ist dazu prinzipiell vorgesehen, dass zur Überprüfung der in Analogtechnik aufgebauten Auswerteschaltung im Betriebszustand die Spannungszuführung zur Sensoreinheit in gewissen Abständen kurzzeitig unterbrochen wird, wodurch der Zustand "Nacht" simuliert wird, und dies bei richtiger Funktionsweise der Auswerteschaltung von ihr so erkannt wird, jedoch bei nicht richtiger Funktionsweise der Auswerteschaltung ein Signal erzeugt wird, durch das auf die Fehlfunktion hingewiesen und die Einleitung weiterer Schritte veranlasst wird.

Durch die in den weiteren Ansprüchen niedergelegten Maßnahmen sind vorteilhafte Weiterbildungen und Verbesserungen der im Anspruch 1 angegebenen Einrichtung möglich.

Nach einer besonders zweckmäßigen Weiterbildung der erfindungsgemäßen Einrichtung ist ein Mikrokontroller vorgesehen, welcher für die Überprüfung die kurzzeitige Unterbrechung der Spannungszuführung zur Sensoreinrichtung in gewissen Abständen über einen bestimmten Ausgang veranlasst und dem das Ausgangssignal der analogen Auswerteschaltung als Eingangssignal an einem bestimmten Eingang zugeführt wird, und seinerseits an einem Ausgang ein Signal zur weiteren Veranlassung abgibt.

Gemäß einer weiteren zweckmäßigen Ausgestaltung der erfindungsgemäßen Einrichtung wird das Ausgangssignal des Mikrokontrollers, das bei nicht richtiger Funktionsweise der Auswerteschaltung erzeugt wird, einem Steuergerät für das Abblendlicht zugeführt, welche die weiteren Schritte einleitet. Solche weiteren Schritte können beispielsweise das automatische Einschalten des Abblendlichtes sein sowie die Information an den Fahrer des Fahrzeugs über die nicht ordnungsgemäße Funktionsweise der analogen Auswerteschaltung.

Entsprechend einer sehr vorteilhaften Ausgestaltung der erfindungsgemäßen Einrichtung liest der Mikrokontroller das Ausgangssignal der Auswerteschaltung über einen Analog/Digital-Eingang ein, wobei eine bestimmte Anzahl von Inkrementen einer bestimmten Spannung entspricht, beispielsweise entsprechen 255 Inkremente der Spannung von 5 V, und dass dann, wenn das Ausgangssignal der Auswerteschaltung über einem bestimmten Grenzwert liegt, diese korrekt funktioniert, d.h. es wird von ihr bei der gewollt durchgeführten Spannungsunterbrechung der simulierte Zustand "Nacht" erkannt, und wenn dies nicht der Fall ist, wird vom Mikrokontroller das Signal zur weiteren Veranlassung generiert.

Entsprechend einer sehr vorteilhaften weiteren Ausgestaltung der Erfindung kann eine zweite Überprüfung vorgenommen werden, die insbesondere Fehler durch Nebenschluss gegen die Versorgungsspannung oder die Masse feststellt. Dazu werden die vom Mikrokontroller erfassten Analog/Digital-Werte, welche die Auswerteschaltung liefert, daraufhin überprüft, ob sie oberhalb eines unteren Grenzwertes liegen. Diese Überprüfung wird in sehr zweckmäßiger Weise softwaremäßig durchgeführt, wobei der untere Grenzwert ein durch die Hardware bedingter Grenzwert ist.

In weiterer vorteilhafter Ausgestaltung dieser zusätzlichen Überprüfung, die beispielsweise bei Nebenschluss gegen die Versorgungsspannung oder Masse von besonderem Vorteil ist, wird beim Unterschreiten des überprüften unteren Grenzwertes vom Mikrokontroller ein Signal generiert, das diese Fehlfunktion der Auswerteschaltung anzeigt und gegebenenfalls durch das Steuergerät für das Abblendlicht für die Veranlassung weiterer Schritte verwendet wird.

Entsprechend einer sehr vorteilhaften zusätzlichen weiteren Ausgestaltung der Erfindung kann eine dritte Überprüfung vorgenommen werden, die der Überprüfung des Analog-/Digital-Wandlers dient, welcher die von der Auswerteschaltung gelieferten Analogwerte in digitale Werte umsetzt. Dazu ist vorgesehen, dass der Analog-/Digital-Wandler, der die von der Auswerteschaltung gelieferten Analogwerte in digitale Werte umwandelt, auf seine Funktionsfähigkeit hin überprüft wird, und dass bei nicht richtiger Funktionsweise der Mikrokontroller an seinem Ausgang ein Signal zur weiteren Veranlassung abgibt.

Gemäß vorteilhafter Weiterbildung dieser dritten Überprüfung ist vorgesehen, dass bei Verwendung des Analog-/Digital-Wandlers des Mikrokontollers dieser durch zyklische Zuführung einer dem Mikrokontroller bekannten Spannung, die vorzugsweise im mittleren Bereich der oberen und unteren Referenzspannung gewählt ist, überprüft wird. Vorzugsweise ist zur Berücksichtigung von Toleranzen der einzelnen Bauteile für die Überprüfung im mittleren Bereich ein oberer und ein unterer Schwellwert festgelegt.

### Zeichnung

Die Erfindung ist anhand eines in der Zeichnung dargestellten Ausführungsbeispieles in der nachfolgenden Beschreibung näher erläutert. Die Figuren zeigen im Einzelnen:
- Fig. 1: schematisch in einem Blockschaltbild den Aufbau der erfindungsgemäß gestalteten Einrichtung zur Überprüfung der Auswerteschaltung einer automatischen Schaltung für Beleuchtungseinrichtungen bei Fahrzeugen;
- Fig. 2: ein Diagramm mit den Analog/Digital-Werten in Abhängigkeit von der Zeit bei der erfindungsgemäß in gewissen Abständen erfolgenden Unterbrechung der Spannungszuführung zur Sensoreinheit, und
- Fig. 3: ein Diagramm zur Überprüfung eines unteren Grenzwertes, wobei die Analog/Digital-Werte über der in Lux gemessenen Lichtstärke L aufgetragen sind.

### Beschreibung des Ausführungsbeispieles

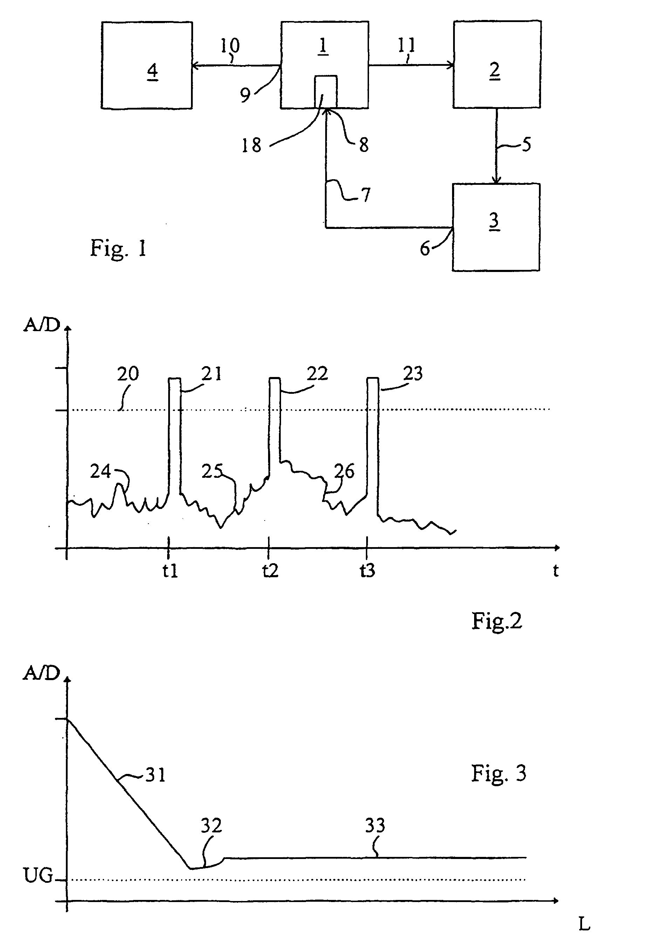

Im schematischen Blockschaltbild der Fig. 1 ist ein Mikrokontroller 1, eine Sensorvorrichtung 2, eine in Analogtechnik aufgebaute Auswerteschaltung 3 sowie ein Steuergerät für das Abblendlicht 4 dargestellt. Die Sensoreinheit 2 enthält einen Globalsensor für die Erfassung der Lichtverhältnisse in der Umgebung des Fahrzeuges und einen Richtungssensor für die gerichtete Erfassung der Lichtverhältnisse in Fahrtrichtung vor dem Fahrzeug. Diese beiden Sensoren sind nicht im Einzelnen dargestellt. Die von ihnen festgestellten Signale werden über eine Leitung 5 der in Analogtechnik aufgebauten Auswerteschaltung 3 zugeführt. Die Auswerteschaltung 3 stellt an einem Ausgang 6 analoge oder auch schon digitale Ausgangswerte zur Verfügung, die über eine Leitung 7 einem Eingang 8 des Mikrokontrollers 1 zugeführt werden. Diese Werte sind mit Analog/Digital-Werte A/D im Nachfolgenden bezeichnet und in den Diagrammen der Figuren 2 und 3 in unterschiedlicher Abhängigkeit nachfolgend noch näher erläutert.

Falls vom Mikrokontroller 1 aufgrund der am Eingang 8 zur Verfügung gestellten Analog/Digital-Werte A/D festgestellt wird, dass die Funktionsweise der Auswerteschaltung 3 nicht korrekt ist, wird von ihm ein dementsprechendes Signal generiert. Dieses Signal wird von einem Ausgang 9 des Mikrokontrollers 1 über die Leitung 10 dem Steuergerät für das Abblendlicht 4 zugeführt, wodurch dieses auf die Fehlfunktion der Auswerteschaltung 3 hingewiesen wird. Damit wird dem Steuergerät für das Abblendlicht 4 die Möglichkeit gegeben, weitere Schritte zu veranlassen. Diese weiteren Schritte können beispielsweise das automatische Einschalten des Abblendlichtes sein, wenn dieses nicht bereits eingeschaltet ist. Es kann weiterhin darüber hinaus der Fahrer über die Fehlfunktion der analogen Auswerteschaltung 3 informiert werden. Dadurch kann durch diesen eventuell eine Überprüfung in einer entsprechenden Werkstatt veranlasst werden.

Die Funktionsweise der erfindungsgemäßen Einrichtung zur Überprüfung der Auswerteschaltung 3 ist nachfolgend beschrieben. Vom Mikrokontroller 1 her wird während des Betriebes, also im Betriebszustand, die Sensoreinheit 2 über eine Leitung 11 mit Spannung versorgt. Zur Überprüfung wird im eingeschalteten Zustand diese Spannungsversorgung auf der Leitung 11 in gewissen Abständen, vorzugsweise zyklisch, durch den Mikrokontroller 1 abgeschaltet. In anderer Ausführungsweise kann beim Mikrokontroller auch der Rechnerport als Ausgang definiert sein. Auf diese Weise wird der Zustand "Nacht" simuliert. Entsprechend einem bestimmten Ausführungsbeispiel ist der Zustand "Nacht" mit der Spannung von 0 V am Messeingang eines Operationsverstärkers bzw. mit 5 V am Eingang eines Analog/Digital-Wandlers des Mikrokontrollers 1 gleichzusetzen. Diese Eingänge sind nicht im Einzelnen dargestellt.

Bei richtiger Funktionsweise, d.h. wenn die analoge Auswerteschaltung 3 in Ordnung ist, erkennt der Mikrokontroller 1 anhand der am Ausgang 6 über die Leitung 7 zum Eingang 8 abgegebenen Analog/Digital-Werte A/D diesen "Nacht"-Zustand. Über Leitung 10 kann das Steuergerät für das Abblendlicht 4 vom Ausgang 9 des Mikrokontrollers 1 her mit der Information versehen werden, dass die Auswerteschaltung 3 ordnungsgemäß funktioniert. Am Eingang 8 liest der Mikrokontroller 1 über einen dort vorhandenen Analog/Digital-Eingang das Messsignal von Leitung 7 ein. Dabei können 255 Inkremente der Spannung von 5 V entsprechen.

Liegt dieser eingelesene A/D-Messwert über einer bestimmten Grenze, die in der Darstellung der Fig. 2 mit 20 bezeichnet ist und als "Nacht"-Grenze bezeichnet werden kann, dann funktioniert die Auswerteschaltung 3 korrekt. Der Zustand "Nacht" wird also erkannt. In der Darstellung der Fig. 2 entsprechen die rechteckförmigen Spitzen 21, 22, 23, die über die Grenze 20 hinausragen, in zyklischer Folge denjenigen Werte, die bei entsprechender Spannungsunterbrechung durch den Mikrokontroller 1 zum Zeitpunkt t1, t2 und t3 in gewissen Abständen erreicht werden. Die Spitzen 21, 22, 23 ragen dabei auch über den sonstigen Verlauf 24, 25, 26 des Diagramms in Fig. 2 hinaus. Wenn hingegen die analoge Auswerteschaltung 3 nicht richtig funktioniert, dann wird durch Spitzen 21, 22 oder 23 der Grenzwert 20 nicht überschritten. Aufgrund dieser Tatsache erscheint am Ausgang 6 der Auswerteschaltung 3 ein entsprechend niedriger Wert, der als solcher über Leitung 7 und den Eingang 8 in den Mikrokontroller 1 eingelesen wird. Dieser stellt diesen Zustand fest und teilt den nicht ordnungsgemäßen Funktionszustand über Leitung 10 dem Steuergerät für das Abblendlicht 4 mit. Dieses kann die bereits erwähnten weiteren Schritte einleiten.

Entsprechend einer weiteren vorteilhaften Ausgestaltung der erfindungsgemäß gestalteten Einrichtung zur Überprüfung der Auswerteschaltung ist eine zweite Überprüfung vorgesehen, ein zweiter Plausibilitätscheck. In Fig. 3 ist dazu in einem Diagramm der Verlauf der Analog/Digital-Werte, die von der Auswerteschaltung 3 geliefert werden, über der Lichtstärke L, die in Lux gemessen wird, aufgetragen. Das Diagramm zeigt, dass der

Analog/Digital-Wert A/D von einem maximalen Wert, der dem Wert von etwa 255 Inkrementen bzw. 5 V bei dem Mikrokontroller 1 entsprechen kann, in einem Ast 31 auf einen niedrigen Wert absinkt, um dann in einem Bogen 32 wieder leicht anzusteigen auf einen konstant bleibenden Wert, der mit 33 bezeichnet ist. Unterhalb dieses Bogenteils 32 und des konstanten Teils 33, ist gestrichelt eingetragen ein unterer Grenzwert UG, auf den hin im zweiten Plausibilitätscheck oder in der zweiten Art der Überprüfung geachtet wird. Die untere Grenze UG ist hardwarebedingt, und die Überprüfung bei der zweiten Überprüfung erfolgt daraufhin, ob die Kurventeile 31, 32 und 33 oberhalb dieser unteren Grenze UG liegen. Aus irgendwelchen Gründen, beispielsweise durch einen Nebenschluss gegen die Versorgungsspannung oder gegen die Masse, kann die untere Grenze UG unterschritten werden, d.h. die von der Auswerteschaltung 3 gelieferten Werte A/D sind kleiner, als durch die untere Grenze UG vorgegeben. Dies wird durch die Software in vorteilhafter Weise durch den Mikrokontroller 1 festgestellt. Falls die Grenze unterschritten wird, wird davon ebenfalls das Steuergerät für das Abblendlicht 4 mit der Information versehen, denn auch dann ist die Auswerteschaltung 3 nicht in Ordnung.

In weiterer vorteilhafter Ausgestaltung der Erfindung ist eine dritte Überprüfung vorgesehen, die der richtigen Funktion des Analog-/Digital-Wandler dient, welcher die von der analogen Auswerteschaltung 3 generierten analogen Signale in digitale Signale umwandelt. Dazu ist vorgesehen, dass der Analog-/Digital-Wandler, der die von der Auswerteschaltung gelieferten Analogwerte in digitale Werte umwandelt, auf seine Funktionsfähigkeit hin überprüft wird. Bei nicht richtiger Funktionsweise gibt der Mikrokontroller 1 an seinem Ausgang 9 ein entsprechendes Signal zur weiteren Veranlassung ab.

Gemäß vorteilhafter, sehr zweckmäßiger Weiterbildung dieser dritten Überprüfung ist vorgesehen, dass bei Verwendung des Analog-/Digital-Wandlers des Mikrokontollers 1 selbst, der in Fig. 1 mit 18 gestrichelt dargestellt ist, dieser durch zyklische Zuführung einer dem Mikrokontroller 1 bekannten Spannung, die vorzugsweise im mittleren Bereich der oberen und unteren Referenzspannung gewählt ist, überprüft wird. Die untere Referenzspannung ist beispielsweise 0 Volt und die obere 5 Volt. Der dem mittleren Bereich zugeordnete Digitalwert lässt sich berechnen. Als mittlerer Bereich kann beispielsweise die Spannung von 3 Volt gewählt werden, dem 153 Inkremente entsprechen. Dem Analog-/Digital-Wandler 18 wird also z.B. die Spannung von 3 V zyklisch zur Überprüfung zugeführt. Werden keine 153 Inkremente erreicht ist der A/D-Wandler fehlerhaft. Vorzugsweise ist zur Berücksichtigung von Toleranzen der einzelnen Bauteile der Hardware für die Überprüfung im mittleren Bereich ein oberer und ein unterer Schwellwert festgelegt, beispielsweise 180 und 110 Inkremente. Wird bei dieser dritten Überprüfung, die vorteilhaft in die Software des Mikrokontollers 1 mit integriert ist, ein Fehler festgestellt, wird auch dieser am Ausgang 9 dem Steuergerät für das Abblendlicht 4 über Leitung 10 als Fehlermeldung der Auswerteschaltung 3 mitgeteilt, um weitere Schritte zu veranlassen.

Mit der Erfindung sind also auf einfache Weise drei Überprüfungstatbestände zu lösen, um festzustellen, ob die in Analogtechnik aufgebaute Auswerteschaltung 3 funktionstüchtig ist oder nicht. Dadurch wird sichergestellt, dass durch die drei möglichen Plausibilitätschecks die Sicherheit beeinflussende Fehler festgestellt werden. Folgen, die aus diesen Fehlern entstehen können, werden gegebenenfalls behoben und entsprechende Mitteilungen an den Fahrer des Fahrzeugs sind möglich.

## Patentansprüche

1. Einrichtung zur Überprüfung der Auswerteschaltung (3) einer automatischen Schaltung für Beleuchtungseinrichtungen bei Fahrzeugen, wobei eine Sensoreinrichtung (2) vorgesehen ist, welche einen Globalsensor für die Erfassung der Lichtverhältnisse in der Umgebung des Fahrzeugs und einen Richtungssensor für die gerichtete Erfassung der Lichtverhältnisse in Fahrtrichtung vor dem Fahrzeug enthält, und die Signale der Sensoreinrichtung (2) der Auswerteschaltung (3) zugeführt werden, um festzustellen, ob eine Änderung des Schaltzustands der Beleuchtungseinrichtungen erforderlich ist,
**dadurch gekennzeichnet, dass**
zur Überprüfung der in Analogtechnik aufgebauten Auswerteschaltung (3) im Betriebszustand die Spannungszuführung zur Sensoreinheit (2) in gewissen Abständen kurzzeitig unterbrochen wird, wodurch der Zustand "Nacht" simuliert wird, und dies bei richtiger Funktionsweise der Auswerteschaltung (3) von ihr so erkannt wird, jedoch bei nicht richtiger Funktionsweise der Auswerteschaltung (3) ein Signal erzeugt wird, durch das auf die Fehlfunktion hingewiesen und die Einleitung weiterer Schritte veranlasst wird.

2. Einrichtung nach Anspruch 1, **dadurch gekennzeichnet, dass** ein Mikrokontroller (1) vorgesehen ist, welcher für die Überprüfung die kurzzeitige Unterbrechung der Spannungszuführung zur Sensoreinrichtung (2) in gewissen Abständen über einen bestimmten Ausgang veranlasst und dem das Ausgangssignal der analogen Auswerteschaltung (3) als Eingangssignal an einem bestimmten Eingang (8) zugeführt wird, und seinerseits an einem Ausgang (9) ein Signal zur weiteren Veranlassung abgibt.

3. Einrichtung nach Anspruch 2, **dadurch gekennzeichnet, dass** das Ausgangssignal des Mikrokontrollers (1), das bei nicht richtiger Funktionsweise der Auswerteschaltung (3) erzeugt wird, einem Steuergerät für das Abblendlicht (4) zugeführt wird, welche die weiteren Schritte einleitet.

4. Einrichtung nach Anspruch 2, **dadurch gekennzeichnet, dass** der Mikrokontroller (1) das Ausgangssignal der Auswerteschaltung (3) über einen Analog/Digital-Eingang (8) einliest, wobei eine bestimmte Anzahl von Inkrementen einer bestimmten Spannung entspricht (z.B. 255 Inkremente = 5V), und dass dann, wenn das Ausgangssignal (6, A/D) der Auswerteschaltung (3) über einem bestimmten Grenzwert (20) liegt, diese korrekt funktioniert, d.h. es wird von ihr bei der gewollt durchgeführten Spannungsunterbrechung der simulierte Zustand "Nacht" erkannt, ist dies nicht der Fall, wird vom Mikrokontroller (1) das Signal zur weiteren Veranlassung generiert.

5. Einrichtung nach einem der Ansprüche 2 bis 4, **dadurch gekennzeichnet, dass** die vom Mikrokontroller (1) erfassten Analog/Digital-Werte (31, 32, 33), welche die Auswerteschaltung (3) liefert, daraufhin überprüft werden, ob sie oberhalb eines unteren Grenzwertes (UG) liegen.

6. Einrichtung nach Anspruch 5, **dadurch gekennzeichnet, dass** die Überprüfung softwaremäßig durchgeführt wird, und dass der untere Grenzwert (UG) ein Hardwaremäßig bedingter Grenzwert ist.

7. Einrichtung nach Anspruch 5 oder 6, **dadurch gekennzeichnet, dass** bei Unterschreiten des überprüften unteren Grenzwertes (UG), beispielsweise bei Nebenschluss gegen die Versorgungsspannung oder Masse, vom Mikrokontroller (1) ein Signal (9) generiert wird, das diese Fehlfunktion der Auswerteschaltung (3) anzeigt und gegebenenfalls durch das Steuergerät für das Abblendlicht (4) für die Veranlassung weiterer Schritte verwendet wird.

8. Einrichtung nach einem der Ansprüche 2 bis 7, **dadurch gekennzeichnet, dass** der Analog-/Digital-Wandler, der die von der Auswerteschaltung gelieferten Analogwerte in digitale Werte umwandelt, auf seine Funktionsfähigkeit hin überprüft wird, und dass bei nicht richtiger Funktionsweise der Mikrokontroller (1) an seinem Ausgang (9) ein Signal zur weiteren Veranlassung abgibt.

9. Einrichtung nach Anspruch 8, **dadurch gekennzeichnet, dass** bei Verwendung des Analog-/Digital-Wandlers (18) des Mikrokontollers (1) dieser durch zyklische Zuführung einer dem Mikrokontroller (1) bekannten Spannung, die vorzugsweise im mittleren Bereich der oberen und unteren Referenzspannung gewählt ist, überprüft wird.

10. Einrichtung nach Anspruch 9, **dadurch gekennzeichnet, dass** im mittleren Bereich ein oberer und ein unterer Schwellwert für die Überprüfung vorgesehen ist.

## Claims

1. Device for checking the evaluation circuit (3) of an automatic switching means for lighting devices in vehicles, wherein a sensor device (2) is provided which contains a global sensor for sensing the light conditions in the surroundings of the vehicle and a direction sensor for the directional sensing of the light conditions in the direction of travel ahead of the vehicle, and the signals of the sensor device (2) are fed to the evaluation circuit (3) in order to determine whether a change in the switched state of the lighting devices is necessary, **characterized in that**, so that the evaluation circuit (3) which is constructed using analogue technology can be checked in the operating state, the voltage supply to the sensor unit (2) is interrupted briefly at specific intervals, as a result of which the state "night" is simulated, and when the evaluation circuit (3) functions correctly this is detected as such by said circuit, but when the evaluation circuit (3) is not functioning correctly a signal is generated which indicates the malfunction and causes further steps to be initiated.

2. Device according to Claim 1, **characterized in that** a microcontroller (1) is provided which, for the checking, causes the voltage supply to the sensor device (2) to be interrupted briefly at specific intervals via a specific output and to which the output signal of the analogue evaluation circuit (3) is fed as an input signal at a specific input (8) and itself outputs a signal at an output (9) in order to initiate further steps.

3. Device according to Claim 2, **characterized in that** the output signal of the microcontroller (1) which is generated when the evaluation circuit (3) is not functioning correctly is fed to a control device for the dipped headlights (4), which initiates the further steps.

4. Device according to Claim 2, **characterized in that** the microcontroller (1) reads in the output signal of the evaluation circuit (3) via an analogue/digital input (8), wherein a specific number of increments corresponds to a specific voltage (for example 255 increments = 5 V), and **in that** if the output signal (6, A/D) of the evaluation circuit (3) is above a specific limiting value (20), said evaluation circuit (3) is functioning correctly, i.e. the simulated state "night" is detected by it during the voltage interruption which is intentionally carried out, and if this is not the case the microcontroller (1) generates the signal for initiating further steps.

5. Device according to one of Claims 2 to 4, **characterized in that** the analogue/digital values (31, 32, 33) which are sensed by the microcontroller (1) and which are supplied by the evaluation circuit (3) are checked to determine whether they lie above a lower limiting value (UG).

6. Device according to Claim 5, **characterized in that** the checking is carried out by means of software, and **in that** the lower limiting value (UG) is a limiting value which is conditioned by means of hardware.

7. Device according to Claim 5 or 6, **characterized in that** when the checked, lower limiting value (UG) is undershot, for example when there is a short circuit to the supply voltage or to earth, the microcontroller (1) generates a signal (9) which indicates this malfunction of the evaluation circuit (3) and, if appropriate, is used by the control device for the dipped headlights (4) in order to initiate further steps.

8. Device according to one of Claims 2 to 7, **characterized in that** the functional capability of the analogue/digital converter which converts the analogue values supplied by the evaluation circuit into digital values is checked, and **in that** when the method of functioning is not correct the microcontroller (1) outputs, at its output (9), a signal for initiating further steps.

9. Device according to Claim 8, **characterized in that** when the analogue/digital converter (18) of the microcontroller (1) is used, it is checked by cyclically supplying a voltage which is known to the microcontroller (1) and is preferably selected in the central range between the upper and lower reference voltages.

10. Device according to Claim 9, **characterized in that** an upper and a lower threshold value in the central range are provided for the checking process.

## Revendications

1. Installation pour vérifier le circuit d'exploitation (3) d'un circuit automatique destiné à des installations d'éclairage sur des véhicules, dans laquelle on prévoit une installation de détection (2) qui contient un détecteur global destiné à détecter les conditions de lumière dans l'environnement du véhicule et un détecteur de direction pour détecter de façon orientée les conditions de lumière à l'avant du véhicule dans la direction de conduite et les signaux de l'installation de détection (2) sont acheminés au circuit d'exploitation (3) afin de déterminer s'il est nécessaire de modifier l'état de commutation des installations d'éclairage,
**caractérisée en ce que**
pour vérifier le circuit d'exploitation (3) construit d'après la technique analogique pendant le fonctionnement, l'acheminement de la tension vers l'installation de détection (2) est momentanément interrompu à intervalles donnés, ce qui simule un état de " nuit ", et ceci est reconnu en tant que tel par le circuit d'exploitation (3) lorsque celui-ci fonctionne correctement, mais si le circuit d'exploitation (3) ne fonctionne pas correctement on produit un signal qui avertit du dysfonctionnement et qui provoque le lancement d'autres étapes.

2. Installation selon la revendication 1,
**caractérisée en ce qu'**
on prévoit un microcontrôleur (1) dont une sortie déterminée, pour réaliser la vérification, autorise une brève interruption de l'acheminement de la tension vers l'installation de détection (2) à des intervalles donnés, auquel le signal de sortie du circuit d'exploitation (3) analogique est acheminé sur une entrée (8) donnée sous forme de signal d'entrée, et qui émet pour sa part à une sortie (9) un signal qui provoque d'autres opérations.

3. Installation selon la revendication 2,
**caractérisée en ce que**
le signal qui sort du microcontrôleur (1) et qui est produit lorsque le circuit d'exploitation (3) ne fonctionne pas correctement est acheminé à un appareil de commande destiné aux feux de croisement (4) et qui lance les autres étapes.

4. Installation selon la revendication 2,
**caractérisée en ce que**
le microcontrôleur (1) lit le signal de sortie du circuit d'exploitation (3) par l'intermédiaire d'une entrée analogique/numérique (8), un certain nombre d'incréments correspondent alors à une certaine tension (par exemple 255 incréments = 5 V), et le circuit d'exploitation (3) fonctionne correctement si son signal de sortie (6, A/D) dépasse une certaine valeur limite (20), c'est-à-dire qu'il reconnaît l'état simulé " nuit " lorsqu'il a intentionnellement interrompu la tension, et si ce n'est pas le cas le microcontrôleur (1) génère le signal qui provoque d'autres opérations.

5. Installation selon l'une des revendications 2 à 4,
**caractérisée en ce que**
les valeurs analogiques/numériques (31, 32, 33), détectées par le microcontrôleur (1), que délivre le circuit d'exploitation (3) sont ensuite vérifiées pour déterminer si elles sont supérieures à une valeur limite (UG) inférieure.

6. Installation selon la revendication 5,
**caractérisée en ce que**
la vérification est réalisée par logiciel et la valeur limite (UG) inférieure est une valeur limite liée au matériel informatique.

7. Installation selon la revendication 5 ou 6,
**caractérisée en ce que**
lorsqu'on descend au-dessous de la valeur limite (UG) inférieure vérifiée, par exemple en cas de dérivation par rapport à la tension d'alimentation ou à la masse, le microcontrôleur (1) génère un signal (9) qui indique ce dysfonctionnement du circuit d'exploitation (3) et qui est éventuellement aussi utilisé par l'appareil de commande destiné aux feux de croisement (4) pour provoquer d'autres opérations.

8. Installation selon l'une des revendications 2 à 7,
**caractérisée en ce qu'**
on vérifie que le convertisseur analogique/numérique qui convertit en valeurs numériques les valeurs analogiques fournies par l'unité d'exploitation est en mesure de fonctionner et, lorsqu'il ne fonctionne pas correctement, le microcontrôleur (1) délivre à sa sortie (9) un signal qui provoque d'autres opérations.

9. Installation selon la revendication 8,
**caractérisée en ce que**
lorsqu'on utilise le convertisseur analogique/numérique (18) du microcontrôleur (1), celui-ci est vérifié en acheminant cycliquement une tension, connue du microcontrôleur (1), qui est de préférence choisie dans la plage moyenne de la tension supérieure et inférieure de référence.

10. Installation selon la revendication 9,
**caractérisée en ce qu'**
la plage moyenne comporte une valeur seuil supérieure et inférieure pour réaliser la vérification.
